# DEMANDE DE BREVET EUROPEEN

(11) **EP 0 732 668 A1**
(43) Date de publication de la demande: **18.09.1996**
(21) Numéro de dépôt: 96400499.8
(22) Date de dépôt: 11.03.1996
(51) Int. Cl.: G06T 5/00

(54) **Méthode d'extraction de contours utilisant une analyse multi-fractale**

(30) Priorité: 17.03.1995 FR 9503142
(71) Demandeur: ALCATEL ALSTHOM COMPAGNIE GENERALE D'ELECTRICITE, F-75008 Paris (FR)
(72) Inventeur: Rezzouk, Jamal, 91400 Orsay (FR); Renouard, Frédéric, 75014 Paris (FR)
(74) Mandataire: Prugneau, Philippe

(57) **Abrégé**

La méthode d'extraction d'un contour d'une zone contrastée dans une image de base numérisée est basée sur la minimisation de l'énergie d'un contour actif initial que l'on soumet à des forces de contrainte. L'image de base numérisée est constituée de pixels ayant des niveaux d'intensité différents définissant ladite zone contrastée à circonscrire. Les forces de contrainte sont dérivées d'une image de potentiel qui est obtenue à partir d'une analyse multi-fractale de l'image de base de telle façon que chaque élément de l'image de potentiel soit représentatif d'une dimension fractale locale (α) au voisinage d'un pixel (I) correspondant dans l'image de base ce qui permet d'améliorer le comportement du contour actif lorsqu'il est déformé sous l'action des forces de contrainte.

## Description

L'invention concerne une méthode d'extraction d'un contour d'une zone contrastée dans une image de base numérisée, en particulier une image photographique numérisée.

L'invention s'applique notamment aux systèmes interactifs d'aide à l'extraction et à l'identification d'infrastructures de sites pour la photo-interprétation d'images satellitaires et aériennes. En particulier, l'invention s'applique à l'extraction et à l'identification de réseaux routiers dans des images photographiques pour la constitution de cartes thématiques ou pour l'implantation de réseaux de radiocommunication.

On entend par image de base numérisée, une image constituée de pixels ayant des niveaux d'intensité différents, suivant une échelle de niveaux d'intensité considérée, et qui définissent des zones contrastées. L'échelle considérée peut être une échelle de niveaux de gris.

On connaît déjà de l'article "Using Dynamic Programming for Minimizing the Energy of Active Contours in the Presence of Hard Constraints" de Amir A. Amini et al, publié par IEEE, Second Int. Conference on Computer Vision, 5 décembre 1988, TAMPA (Floride), page 95-99, une méthode d'extraction de contours basée sur la minimisation d'énergie d'un contour actif initial. L'article "Towards Dynamic Adaptation of snakes contours - International Conference Image Analysis & Processing", Como (Italie), septembre 1991 de Marie-Odile Berger, fait encore référence à cette méthode d'extraction de contours.

Suivant cette méthode, on déforme un contour actif initialement placé proche d'une zone contrastée dans l'image de base numérisée en le soumettant à l'influence de forces de contrainte jusqu'à ce qu'il se stabilise dans une position qui définit normalement le contour de cette zone contrastée, la position stable du contour initial correspondant à un minimum d'énergie de celui-ci.

Ces forces de contrainte sont dérivées d'une image de potentiel obtenue par un traitement de l'image de base numérisée. Dans l'article de Marie-Odile Berger indiqué ci-dessus, l'image de potentiel résulte de la transformation de l'image d'intensité de base par un opérateur gradient. Il faut comprendre que les pixels de l'image de base placés sur le contour d'une zone contrastée apparaissent comme des minima locaux de potentiel dans l'image de potentiel et que la recherche du minimum d'énergie du contour actif est un processus itératif qui pousse ce contour vers ces minima locaux de potentiel.

L'opérateur gradient d'intensité est un opérateur qui traduit une variation d'intensité au voisinage d'un pixel de l'image de base. Il existe plusieurs méthodes pour calculer le gradient d'intensité, comme la méthode de Roberts divulguée dans l'ouvrage "Digital Image Processing - page 498" de William K. Pratt ou la méthode de Prewitt et Sobel divulguée dans le même ouvrage, page 503.

Cet opérateur gradient d'intensité a pour inconvénient de traduire uniformément toutes les variations d'intensité dans l'image en minima locaux de potentiel, que ces variations soient ponctuelles, qu'elles suivent des lignes régulières comme les contours d'infrastructures de sites ou qu'elles suivent des lignes irrégulières dues à des variations de texture dans l'image. Ces variations de texture sont fréquentes lorsque des zones boisées, ombrées ou analogues apparaissent dans l'image de base.

Si on cherche à extraire les contours d'infrastructures de sites dans une image comportant des zones présentant des variations de texture comme indiqué ci-dessus, en utilisant la minimisation d'énergie d'un contour actif initial, on s'aperçoit que ce contour actif initial est autant poussé vers les minima locaux de potentiel dus aux contours de ces infrastructures que vers les minima locaux de potentiel dus aux variations de texture. Il en résulte que le contour actif a un comportement de déformation fortement perturbé.

Le but de l'invention est de proposer une solution pour supprimer, ou du moins réduire, dans l'image de potentiel, les minima locaux indésirables, en particulier les minima locaux dus à des variations de texture, quand il s'agit d'extraire des contours d'infrastructures de sites par exemple.

Un autre but de l'invention est de proposer une solution pour pouvoir extraire facilement, à l'aide de la minimisation d'énergie d'un contour actif initial, des contours de zones contrastées préalablement définis suivant un critère de singularité comme la régularité.

A cet effet, l'invention a pour objet une méthode d'extraction d'un contour d'une zone contrastée dans une image de base numérisée constituée de pixels ayant des niveaux d'intensité différents définissant ladite zone contrastée. Cette méthode est basée sur la minimisation de l'énergie d'un contour actif initial que l'on soumet à des forces de contrainte dérivées d'une image de potentiel obtenue par traitement de l'image de base. Selon l'invention, l'image de potentiel est obtenue à partir d'une analyse multi-fractale de l'image de base de telle façon que chaque élément de l'image de potentiel soit représentatif d'une dimension fractale locale au voisinage d'un pixel correspondant dans l'image de base.

L'analyse multi-fractale est une analyse du comportement d'une mesure quand on fait varier l'échelle à laquelle on l'applique. Les mesures multi-fractales ont la capacité de décrire une image, au niveau de chaque pixel, en termes de type de singularité, d'intensité de singularité et de densité de singularité. En d'autres termes, une singularité rare est représentative d'une ligne ou d'un contour dans l'image tandis qu'une singularité dense est représentative d'une zone fortement texturée dans l'image. Une singularité peut se caractériser notamment pas une régularité. En choisissant convenablement la mesure multi-fractale, il est possible de discriminer, suivant les valeurs de la dimension fractale, des contours réguliers correspondant à des infrastructures de sites par exemple, et des contours irréguliers correspondant à des zones naturelles comme des massifs boisés.

Suivant un mode de réalisation de l'invention, la dimension fractale locale est une estimation du coefficient de Hölder calculé à partir d'une mesure multi-fractale qui porte sur un dénombrement, dans des voisinages différents centrés sur le pixel considéré, des pixels ayant une intensité proche de celle du pixel considéré. Cette mesure permet de mettre en évidence facilement des lignes fines dans l'image de base correspondant par exemple à des périmètres d'infrastructures de sites, comme des bâtiments.

Suivant un autre mode de réalisation de l'invention, la dimension fractale locale est calculée à partir d'une mesure multi-fractale portant sur un dénombrement, dans des voisinages différents centrés sur le pixel considéré, des pixels ayant une intensité proche de celle du pixel considéré, ces pixels étant en plus connexes au pixel considéré. Cette mesure est particulièrement adaptée à l'extraction et l'identification d'axes routiers, notamment quand ceux-ci sont constitués de deux voies parallèles distinctes.

D'autres caractéristiques et avantages de l'invention ressortiront encore mieux de la description qui suit d'un exemple de réalisation de l'invention.

La figure 1 illustre le processus de calcul d'une dimension fractale locale selon l'invention.

La figure 2 illustre une première image d'intensité sur la base de laquelle sont calculées des dimensions fractales locales.

La figure 3 illustre encore le processus de calcul d'une dimension fractale selon l'invention.

Les figures 4 à 6 illustrent une seconde image d'intensité sur la base de laquelle est calculée une dimension fractale locale d'un pixel suivant une première mesure multi-fractale.

La figure 7 illustre le calcul de la dimension fractale locale pour un pixel de l'image montrée aux figures 4 à 6.

La figure 8 illustre une troisième image d'intensité sur la base de laquelle est calculée une dimension fractale locale pour un pixel suivant une seconde mesure multi-fractale.

La méthode d'extraction de contours selon l'invention est basée sur la minimisation d'énergie d'un contour actif initial soumis à des forces de contrainte. Cette méthode requiert la constitution d'une image de potentiel à partir de laquelle sont dérivées les forces de contrainte. Cette image de potentiel est obtenue par traitement d'une image de base numérisée faisant apparaître une zone contrastée dont on cherche à extraire le contour. Dans le cas présent, l'image de base est une image comportant des pixels ayant différents niveaux de gris. Cette image de base est appelée par la suite image d'intensité.

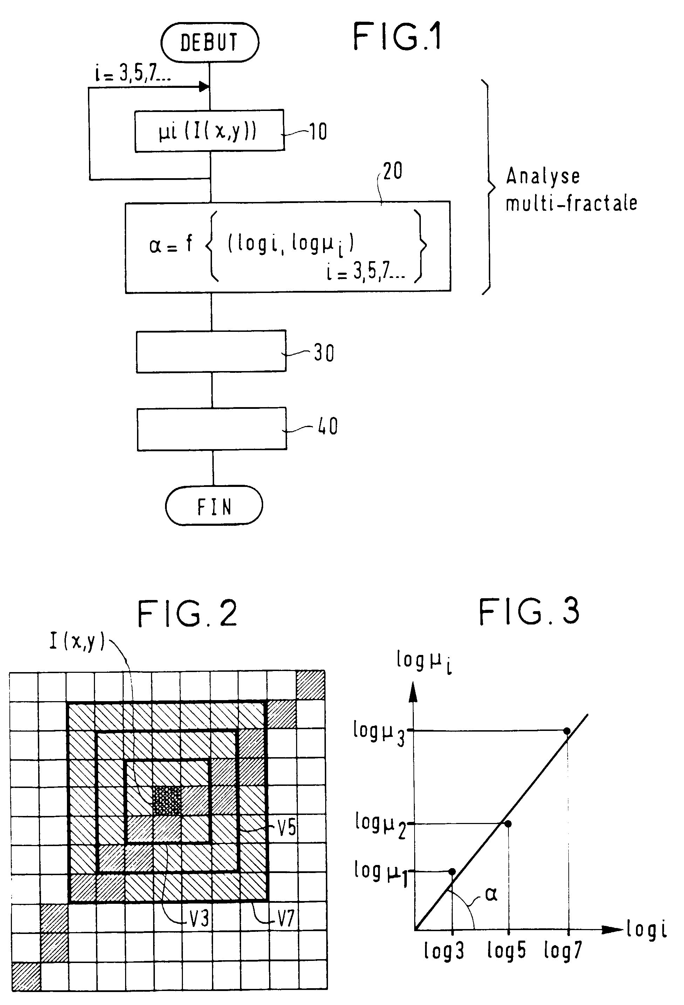

La figure 1 illustre une image d'intensité (dans l'exemple, l'image est de très petite dimension) dans laquelle les pixels sont représentés par des carrés. Chaque pixel a un niveau d'intensité particulier. Par convention, les carrés blancs ont un niveau d'intensité égal à 0, les carrés gris clair ont un niveau d'intensité égal à 1 et les carrés gris foncé et noir ont un niveau d'intensité égal à 2. Ici, le nombre de niveaux d'intensité est choisi très petit pour simplifier la description de la méthode selon l'invention.

Selon l'invention, le traitement de l'image d'intensité, pour obtenir l'image de potentiel, met en oeuvre une analyse multi-fractale. Plus particulièrement, chaque élément de l'image de potentiel est représentatif d'une dimension fractale locale au voisinage d'un pixel dans l'image d'intensité. Cette dimension fractale est estimée selon l'invention par l'exposant de Hölder. Cet exposant traduit la façon dont varie une mesure lorsqu'on change la taille du voisinage sur lequel elle est appliquée.

Le calcul de l'exposant de Hölder pour un pixel de l'image d'intensité selon l'invention est effectué de la façon illustrée sur la figure 1.

Le pixel a un niveau d'intensité défini par I(x,y) ou x et y désignent les coordonnées du pixel dans l'image d'intensité. Les valeurs d'une mesure multi-fractale µ sont calculées en 10 pour des voisinages successifs Vi du pixel I(x,y) centrés sur ce pixel. Ces voisinages Vi (V3,V5,V7) montrés sur la figure 2 sont des fenêtres de différentes tailles i, i représentant la dimension d'un côté de la fenêtre en nombre de pixels. Le côté de chaque fenêtre comporte forcément un nombre i impair de pixels. Le nombre de valeurs de la mesure à calculer pour chaque pixel est un paramètre qui est à définir au préalable.

Dans le cas de la figure 1, on calcule trois valeurs µ ₃,µ₅,µ₇ de la mesure multi-fractale pour trois voisinages du pixel I(x,y). Ensuite, on calcule en 20, la valeur de l'exposant de Hölder α(I(x,y)) par une fonction f d'estimation de la pente de la régression linéaire des points de coordonnées (log 3, log (µ₃), (log 5, log (µ₅), (log 7, log (µ₇). La pente α de la régression linéaire est illustrée sur la figure 3 et correspond à la dimension fractale calculée pour le pixel I(x,y) de l'image de base.

Le processus de calcul exposé ci-dessus est répété pour chaque pixel I de l'image d'intensité de façon à obtenir une image de dimensions fractales locales correspondant à l'image d'intensité.

Selon l'invention, on utilise comme mesure multi-fractale, une mesure µiso dont la valeur, pour un voisinage donné centré sur un pixel considéré, est égale au nombre de pixels dans ce voisinage dont les niveaux d'intensité sont proches (à une erreur ξ près) du niveau d'intensité du pixel considéré.

Cette mesure est adaptée pour l'extraction de contours réguliers comme le contour d'infrastructures de sites tels que des bâtiments.

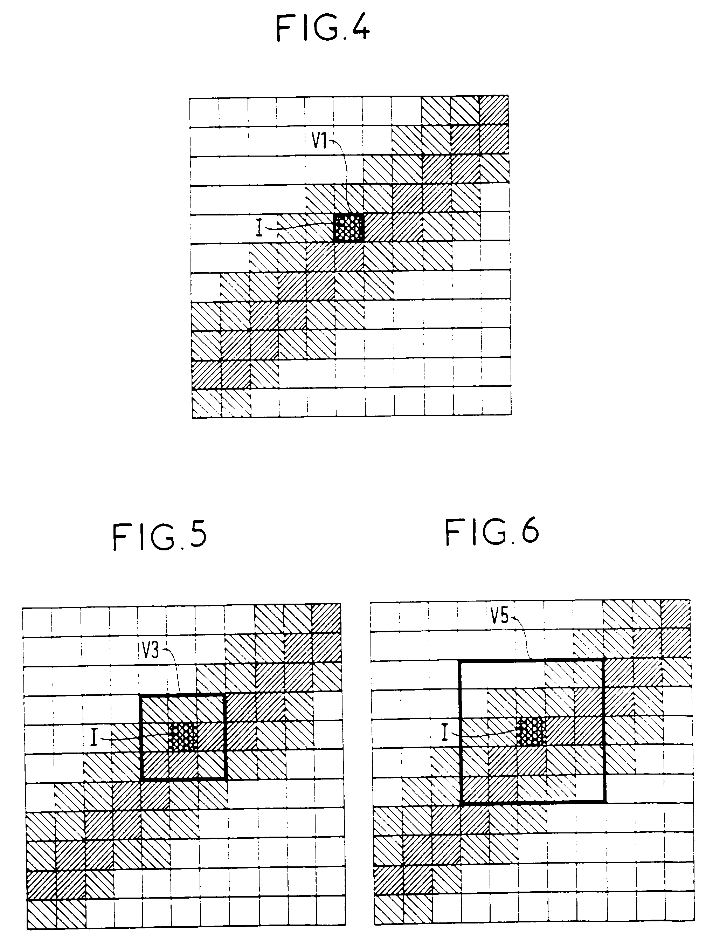

La figure 4 montre encore un exemple d'image d'intensité. La valeur de la mesure µiso pour un voisinage V1 de taille 1 dans cette image d'intensité et centré sur le pixel I est égale à 1 (la valeur d'erreur ξ est ici fixée inférieure à 1).

Figure 5, la valeur de la mesure µiso pour un voisinage V3 de taille 3 dans cette image d'intensité centré sur le pixel I est égale à 4.

Figure 6, la valeur de la mesure µiso pour un voisinage V5 de taille 5 centré sur le même pixel I est égale à 8. On obtient après l'étape 10 de la figure 1, les couples de valeurs suivants: (1,1),(3,4),(5,8). La dimension fractale calculée pour ce pixel I correspond à la pente de la droite de régression linéaire passant par les points de coordonnées (log 1, log 1), (log 3, log 4), (log 5, log 8) c'est-à-dire les points de coordonnées (0,0), (1.0986, 1.3862), (1.6094, 2.0794).

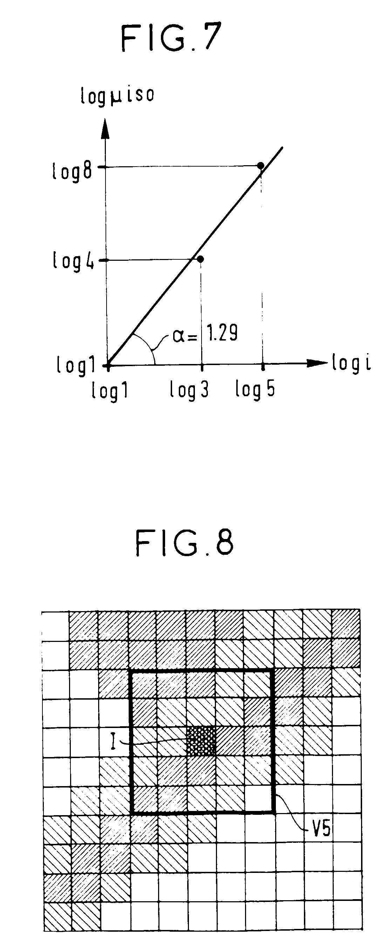

Figure 7, la pente α pour cette droite de régression est estimée à 1.29. A noter que pour cette mesure µiso, une valeur de α pour un pixel donné proche de 1.0 traduit le fait que ce pixel se situe sur une ligne régulière d'un contour tandis qu'une valeur proche de 1.3 traduit le fait que ce pixel se trouve sur une ligne irrégulière d'un contour.

Les dimensions fractales locales obtenues suite à l'étape 20 sur la figure 1 sont filtrées dans l'étape 30 pour ne retenir que celles comprises entre deux seuils préalablement choisis, par exemple celles dont la valeur s'approche de 1.0 et qui correspondent à des contours réguliers pour obtenir une image filtrée débarrassée des pixels pouvant perturber le comportement du contour actif. On comprend que les valeurs des seuils doivent toutefois être déterminées expérimentalement en fonction du type de contour à extraire. A l'issue du seuillage par hystérisis indiqué ci-dessus, on obtient une image filtrée dont les éléments ont une valeur binaire, par exemple 0 si la dimension fractale locale pour cet élément est située en dehors des deux seuils et 1 si elle est située entre les deux seuils. Cette image filtrée est traitée ensuite dans l'étape 40 pour faire apparaître les minima de potentiels par un opérateur distance qui affecte à chaque point de l'image filtrée, une valeur représentative de sa distance par rapport au point le plus proche ayant une valeur binaire non nulle. L'image de potentiel est obtenue à l'issu de ce traitement 40.

A noter que les tailles du plus petit voisinage et du plus grand voisinage définis dans l'étape 10 sur la figure 1, peuvent être réglées en fonction de la largeur de la zone contrastée à circonscrire pour optimiser le calcul des dimensions fractales. Ainsi, la taille du plus petit voisinage peut avantageusement être égale à la largeur de cette zone tandis que la taille du plus grand voisinage peut avantageusement être égale à deux fois la largeur de cette zone. Il est entendu que pour optimiser le calcul des dimensions fractales locales, on recherchera un nombre de voisinages le plus faible possible.

En variante, on utilise comme mesure multi-fractale une mesure µconnexe dont la valeur pour un voisinage donné centré sur un pixel considéré est égale au nombre de pixels de ce voisinage dont les niveaux d'intensité sont proches (à une erreur ξ près) du niveau d'intensité du pixel considéré, ces pixels étant en plus connexes au pixel considéré.

Cette mesure est adaptée pour l'extraction de contours réguliers se présentant sous la forme de lignes parallèles comme les axes routiers.

A titre d'exemple, la valeur de la mesure µconnexe pour un voisinage de taille 5 sur la figure 8 est égale à 8 alors que la valeur de la mesure µiso pour ce même voisinage est égale à 12.

La méthode d'extraction de contours selon l'invention présente donc l'avantage d'être réglable sur un type de singularité préalablement déterminé par un changement de la mesure multi-fractale retenue pour obtenir l'image de potentiel.

## Revendications

1. Une méthode d'extraction d'un contour d'une zone contrastée dans une image de base numérisée constituée de pixels ayant des niveaux d'intensité différents définissant ladite zone contrastée, cette méthode étant basée sur la minimisation de l'énergie d'un contour actif initial que l'on soumet à des forces de contraintes dérivées d'une image de potentiel obtenue par traitement de l'image de base, caractérisée en ce que l'image de potentiel est obtenue à partir d'une analyse multi-fractale (10,20) de l'image de base de telle façon que chaque élément de l'image de potentiel soit représentatif d'une dimension fractale locale (α) au voisinage d'un pixel (I) correspondant dans l'image de base.

2. La méthode selon la revendication 1, dans laquelle la dimension fractale locale (α) est une estimation du coefficient de Hölder calculé à partir d'une mesure multi-fractale (µiso) portant sur un dénombrement, dans des voisinages différents centrés sur le pixel considéré, des pixels ayant une intensité proche de celle du pixel considéré.

3. La méthode selon la revendication 1, dans laquelle la dimension fractale locale (α) est une estimation du coefficient de Hölder calculé à partir d'une mesure multi-fractale (µconnexe) portant sur un dénombrement, des voisinages différents centrés sur le pixel considéré, des pixels ayant une intensité proche de celle du pixel considéré et connexes à celui-ci.

4. La méthode selon l'une des revendications 2 et 3, comportant un seuillage par hystérisis (30) des dimensions fractales locales pour obtenir l'image de potentiel.
